# EUROPEAN PATENT APPLICATION

(11) **EP 4 759 969 A1**
(43) Date of publication of application: **17.06.2026**
(21) Application number: 23932291.0
(22) Date of filing: 10.10.2023
(51) Int. Cl.: C25B 11/02, C25B 11/042, C25B 1/04

(54) **ELECTRODE PLATE OF ELECTROLYSIS DEVICE, AND ELECTROLYSIS DEVICE USING SAME**

(30) Priority: 12.08.2023 CN 202311012895
(71) Applicant: Zhejiang Haizhuo New Energy Technology Co., Ltd., Jiaxing, Zhejiang 314001 (CN); Siltrax Pty Ltd, Sydney, New South Wales 2000 (AU); Suzhou Haizhuo New Energy Technology Co., Ltd, Suzhou, Jiangsu 215500 (CN)
(72) Inventor: SHI, Zhengrong, Jiaxing, Zhejiang 314001 (CN); ZHU, Jingbing, Jiaxing, Zhejiang 314001 (CN); WANG, Peiyuan, Jiaxing, Zhejiang 314001 (CN)
(74) Representative: Becker, Eberhard
(86) International application number: PCT/CN2023/123797
(87) International publication number: WO 2025/035562

(57) **Abstract**

The present invention discloses an electrode plate of an electrolysis apparatus and an electrolysis apparatus to which the electrode plate is applied. A direct current power supply is connected to the electrolysis apparatus and an electrolyte is injected into the electrolysis apparatus, to convert electric energy into chemical energy. The electrode plate includes a silicon-based electrode plate made of a doped conductive silicon material. The silicon-based electrode plate is electrically connected to the direct current power supply, and a flow channel is disposed on at least one surface of the silicon-based electrode plate, so that the electrolyte is input into the electrolysis apparatus through the silicon-based electrode plate, to implement an electrochemical reaction and output a reaction product. In the present invention, on a basis of maintaining good mechanical support and sealing function, material and process costs of the electrode plate of the electrolysis apparatus are significantly reduced, an overpotential of the electrochemical reaction for producing the reaction product is reduced, and an electrolysis reaction rate per unit area in the electrolysis apparatus is increased. Therefore, an operating voltage is effectively reduced at a same electrochemical reaction rate, and energy conversion efficiency of the electrochemical reaction is finally significantly improved.

## Description

The present application claims priority to Chinese Patent Application No. 2023110128956, filed with the China National Intellectual Property Administration on August 12, 2023 and entitled "ELECTRODE PLATE OF ELECTROLYSIS APPARATUS AND ELECTROLYSIS APPARATUS TO WHICH ELECTRODE PLATE IS APPLIED", which is incorporated herein by reference in its entirety.

### Technical Field

The present invention belongs to the field of electrolysis, and specifically, relates to an electrode plate of an electrolysis apparatus. The present invention further relates to an electrolysis apparatus to which the electrode plate is applied.

### Related Art

An electrolysis apparatus is an apparatus converting electric energy into chemical energy. A typical electrolysis apparatus includes a water electrolysis hydrogen production apparatus. Water electrolysis hydrogen production is a carbon-free mature technology and is a green and sustainable development route. Currently, water electrolysis hydrogen production has become one of the most important links in the development of hydrogen energy.

Specifically, an electrode plate is an important key component of the electrolysis apparatus (especially, the water electrolysis hydrogen production apparatus), and is mainly responsible for a plurality of functions for a main structure of the electrolysis apparatus, such as, mechanical support, a sealing body, current conduction and distribution, reactant and product transmission and distribution, and heat and coolant (if any) transmission and distribution.

However, because the electrolysis apparatus, especially an anode side, operates in an environment with a high temperature and a high potential, chemical stability of a material needs to be high. Most electrode plates of current electrolysis apparatuses have poor durability in an electrochemical operating environment because of being metal electrode plates (made of titanium, nickel, stainless steel, and another metal material). To improve durability, a metal material that has a high price and is difficult to process needs to be used, and a precious metal protection coating that has high costs and a tedious processing and manufacturing process needs to be disposed on a surface of an anode plate. In addition, an electrode plate of an existing electrolysis apparatus is usually manufactured through mechanical processing, resulting in poor processing precision of a size of a flow channel structure on the electrode plate. In this case, mass transfer rates of a reactant and a product in the electrolysis apparatus to which the electrode plate is applied is obviously affected. In addition, a surface structure of the electrode plate is simple and has a small area ratio, which affects a reaction rate per unit area in the electrolysis apparatus. Currently, researches and reports on use of a non-metallic material as an electrode plate in the field of pure electrolysis hydrogen production have not been found.

Therefore, based on the tracking research of the electrolysis apparatus and the accumulated knowledge level of the inventor's team in silicon-based materials, the present application hopes to find a technical solution to resolve the above technical problems.

### SUMMARY OF INVENTION

In view of this, an objective of the present invention is to provide an electrode plate of an electrolysis apparatus and an electrolysis apparatus to which the electrode plate is applied. On a basis of maintaining good mechanical support and sealing function, material costs of the electrode plate of the electrolysis apparatus are significantly reduced, an overpotential of an electrochemical reaction for producing a reaction product is reduced, and an electrolysis reaction rate per unit area in the electrolysis apparatus is increased. Therefore, an operating voltage is effectively reduced at a same electrochemical reaction rate, and energy conversion efficiency of the electrochemical reaction is finally significantly improved.

Technical solutions of the present invention are as follows.

An electrode plate of an electrolysis apparatus is provided. A direct current power supply is connected to the electrolysis apparatus and an electrolyte is injected into the electrolysis apparatus, to convert electric energy into chemical energy. The electrode plate includes a silicon-based electrode plate made of a doped conductive silicon material. The silicon-based electrode plate is electrically connected to the direct current power supply, and a flow channel is disposed on at least one surface of the silicon-based electrode plate, so that the electrolyte is input into the electrolysis apparatus through the silicon-based electrode plate, to implement an electrochemical reaction and output a reaction product.

Preferably, resistivity of the silicon-based electrode plate is not greater than 0.1 ohm-centimeter, preferably, is 1 milliohm-centimeter to 30 milliohms-centimeter; the silicon-based electrode plate is made of a monocrystalline silicon or polycrystalline silicon material, preferably, made of a monocrystalline silicon material; and/or a thickness range of the silicon-based electrode plate is 0.1 millimeter to 10 millimeters, preferably, is 0.2 millimeter to 5 millimeters.

It should be noted that the silicon-based electrode plate manufactured by using a crystalline silicon material (including monocrystalline silicon or polycrystalline silicon) in the present application has better heat conductivity than that of metal, and can better conduct and distribute heat produced in the electrochemical reaction by the electrolysis apparatus to which the silicon-based electrode plate provided in the present application is applied. In addition, the electrolysis apparatus to which the silicon-based electrode plate provided in the present application is applied has better temperature uniformity, thereby reducing an impact of temperature nonuniformity on performance and a service life of the electrolysis apparatus. In addition, a fine flow channel structure can be manufactured based on the silicon-based electrode plate, and consistency of a flow field structure and a surface appearance of the silicon-based electrode plate can be precisely controlled. In subsequent application, a plurality of electrolysis units manufactured based on the silicon-based electrode plate are stacked to obtain a multi-layer electrolysis apparatus. Performance of the electrolysis units in the multi-layer electrolysis apparatus is more consistent. Therefore, it is more conducive to increasing application requirements for a quantity of electrolysis units in the multi-layer electrolysis apparatus, to further improve performance and a service life of the multi-layer electrolysis apparatus.

Preferably, the flow channel includes a channel structure including grooves and ridges distributed in an alternate manner; a width of the groove is 0.2 millimeter to 5 millimeters, preferably, 0.5 millimeter to 1 millimeter; a width of the ridge is 0.1 millimeter to 10 millimeters, preferably, 0.2 millimeter to 0.4 millimeter; a height of the ridge is 0.1 millimeter to 5 millimeters, preferably, 0.12 millimeter to 0.5 millimeter; and/or the flow channel includes a porous or textured structure, a pore diameter of the porous structure or a feature size of the textured structure is 0.1 micrometer to 1000 micrometers, preferably, 0.3 micrometer to 10 micrometers.

Preferably, the channel structure is manufactured through an alkaline corrosion process or an electrochemical corrosion process; and the porous structure or the textured structure is manufactured according to a liquid phase method or a vapor phase method. Preferably, the liquid phase method specifically includes a process such as selective corrosion, electrochemical corrosion, or catalytic corrosion. The vapor phase method includes a process such as plasma etching. These processes are well-known processes, and various required channel structures, porous structures, or textured structures can be manufactured according to actual application requirements. When the electrolyte is input into the electrolysis apparatus, an effective contact area between a catalyst and the electrolyte on the silicon-based electrode plate is increased to increase mass transfer rates of a reaction raw material and a reaction product in the electrochemical reaction and/or a reaction rate on a surface of the silicon-based electrode plate.

Preferably, at least a part of the flow channel is coated with a catalyst for promoting the electrochemical reaction; and the catalyst is a metal-based catalyst or a non-metal-based catalyst, preferably, an iridium-based catalyst, a platinum-based catalyst, a nickel catalyst, or a nickel alloy catalyst.

Preferably, an area ratio range of the flow channel is 1.2 to 5, preferably, 1.5 to 3, and more preferably, 1.7 to 2. The area ratio mentioned in the present application refers to a ratio of a total area of a surface that is of the flow channel and that is exposed to the electrolyte (that is, a corresponding area of the electrode plate in contact with the electrolyte, that is, an effective reaction area of the electrode plate) to an area of a surface of the flow channel in an electrolysis bath. Electron microscope scanning may be performed on the electrode plate for "the total area of the surface that is of the flow channel and that is exposed to the electrolyte" and "the area of the surface of the flow channel in the electrolysis bath" in the present application by using a well-known scanning electron microscope (SEM), to obtain an SEM image. The total area of the surface that is of the flow channel and that is exposed to the electrolyte and the area of the surface of the flow channel in the electrolysis bath may be separately measured through electron microscope scanning, to further obtain an area ratio of the flow channel.

Preferably, the electrode plate serves as a bipolar plate.

At least an electrolyte connection port, an anode product outlet, and a cathode product outlet are separately disposed on the silicon-based electrode plate.

An anode flow channel connected to the anode product outlet is disposed on one surface of the silicon-based electrode plate, and a cathode flow channel connected to the cathode product outlet is disposed on the other surface.

The electrolyte connection port is connected to the anode flow channel and/or the cathode flow channel.

Preferably, the electrode plate serves as a bipolar plate, and the bipolar plate includes at least a first silicon-based electrode plate and a second silicon-based electrode plate that are stacked together.

At least an electrolyte connection port, an anode product outlet, a cathode product outlet, and a coolant connection port are disposed on each of the silicon-based electrode plates.

An anode flow channel connected to the anode product outlet is disposed on an outer surface of the first silicon-based electrode plate, and a cathode flow channel connected to the cathode product outlet is disposed on the second silicon-based electrode plate.

The electrolyte connection port is connected to the anode flow channel and/or the cathode flow channel.

A coolant flow channel connected to the coolant connection port is formed between the first silicon-based electrode plate and the second silicon-based electrode plate.

Preferably, the electrode plate serves as a terminal anode plate or a terminal cathode plate, and the terminal anode plate or the terminal cathode plate includes the silicon-based electrode plate made of the doped conductive silicon material.

An electrolyte connection port and an anode product outlet or a cathode product outlet are disposed on the silicon-based electrode plate.

An anode flow channel connected to the anode product outlet or a cathode flow channel connected to the cathode product outlet is disposed on one surface of the silicon-based electrode plate.

The electrolyte connection port is connected to the anode flow channel or the cathode flow channel.

Preferably, the electrode plate serves as a terminal anode plate or a terminal cathode plate, the terminal anode plate or the terminal cathode plate includes at least a first silicon-based electrode plate and a second silicon-based electrode plate that are stacked together, and each of the silicon-based electrode plates is made of the doped conductive silicon material.

At least an electrolyte connection port, an anode product outlet or a cathode product outlet, and a coolant connection port are disposed on each of the silicon-based electrode plates.

An anode flow channel connected to the anode product outlet or a cathode flow channel connected to the cathode product outlet is disposed on an outer surface of the first silicon-based electrode plate or the second silicon-based electrode plate.

The electrolyte connection port is connected to the anode flow channel or the cathode flow channel.

A coolant flow channel connected to the coolant connection port is formed between the first silicon-based electrode plate and the second silicon-based electrode plate.

Preferably, an electrolysis apparatus is provided. A direct current power supply is connected to the electrolysis apparatus and an electrolyte is injected into the electrolysis apparatus, to convert electric energy into chemical energy, and an electrode plate of the electrolysis apparatus is the electrode plate described above.

Preferably, the electrolyte is pure water, an alkaline aqueous solution, or an acidic aqueous solution, and water is electrolyzed to produce hydrogen and oxygen through an electrochemical reaction.

Preferably, the electrolysis apparatus includes an anode collector plate connected to a positive terminal of the direct current power supply, a cathode collector plate connected to a negative terminal of the direct current power supply, a terminal anode plate electrically connected to the anode collector plate, and a terminal cathode plate electrically connected to the cathode collector plate, where a membrane, a proton exchange membrane, or one or more electrolysis units connected in series and/or parallel are disposed between the terminal anode plate and the terminal cathode plate, and the electrolysis unit includes a bipolar plate and membranes or proton exchange membranes located on two sides of the bipolar plate.

Preferably, the electrolysis apparatus is manufactured into a standard product, and the standard product is assembled into a required electrolysis apparatus module after being connected to the direct current power supply in series and/or parallel, and when electricity supply of the direct current power supply is not enough for all electrolysis apparatuses to operate, some electrolysis apparatuses selectively stop operating, to enable the remaining electrolysis apparatuses to perform electrolysis normally.

Operating principles and advantages of the present invention are as follows: Prior to the proposal of the concept of the present invention, the applicants find that, to implement good mechanical support and functions such as excellent current conduction, heat conduction and heat distribution, and reactant and product distribution, it is usually considered in the conventional technology to use a metal electrode plate (especially, a carbon steel or titanium plate with a thickness of 2 mm to 5 mm is usually preferred) as an electrode plate of a water electrolysis apparatus. The applicants are surprised to find that, when a silicon wafer is manufactured into an electrode of a silicon-based electrolysis apparatus, on a basis of maintaining good mechanical support and sealing function, material and process costs of the electrode plate of the electrolysis apparatus are significantly reduced due to abundant silicon material resources and a mature processing technology of the silicon wafer. In addition, it should be particularly noted that, in the present application, the silicon-based electrode plate is electrically connected to the direct current power supply, and a required fine flow channel is manufactured on the silicon-based electrode plate to form fine and reliable flow field distribution, thereby increasing mass transfer rates of the reactant and the product in the electrolysis apparatus and reducing an overpotential of an electrolysis reaction. In addition, a contact area between the electrolyte and the electrode plate can be effectively increased by manufacturing various surface appearances on the silicon-based electrode plate with a flow field, so that an overpotential of the electrochemical reaction is reduced. In the present application, because the overpotential of the electrochemical reaction can be reduced at many levels, an operating voltage of the electrochemical reaction is effectively reduced, and energy conversion efficiency of the electrochemical reaction is finally significantly improved. In addition, compared with a metal-based electrode in the conventional technology, in the present application, operating temperature uniformity of the electrochemical reaction and unit consistency in the electrolysis apparatus including a plurality of electrochemical reaction units can be further significantly improved, thus improving electrolysis performance and a service life of the electrolysis apparatus.

### BRIEF DESCRIPTION OF DRAWINGS

FIG. 1 is a schematic diagram of a structure of a bipolar plate in Embodiment 1 according to a specific implementation of the present invention;
FIG. 2 is a schematic diagram of a structure of a terminal anode plate in Embodiment 2 according to a specific implementation of the present invention;
FIG. 3 is a schematic diagram of a structure of a terminal cathode plate in Embodiment 3 according to a specific implementation of the present invention;
FIG. 4 is a schematic diagram of a structure of a bipolar plate in Embodiment 4 according to a specific implementation of the present invention;
FIG. 5 is a schematic diagram of a structure of a terminal anode plate in Embodiment 5 according to a specific implementation of the present invention;
FIG. 6 is a schematic diagram of a structure of a terminal cathode plate in Embodiment 6 according to a specific implementation of the present invention;
FIG. 7 is a schematic diagram of a structure of a bipolar plate in Embodiment 7 according to a specific implementation of the present invention;
FIG. 8 is a schematic diagram of a structure of a bipolar plate in Embodiment 9 according to a specific implementation of the present invention;
FIG. 9 is a schematic diagram of a structure of a bipolar plate in Embodiment 10 according to a specific implementation of the present invention;
FIG. 10 is a schematic diagram of an installation structure of an electrode plate of an electrolysis apparatus in Embodiment 14 according to a specific implementation of the present invention;
FIG. 11 is a schematic diagram of an installation structure of an electrolysis apparatus in Embodiment 14 according to a specific implementation of the present invention;
FIG. 12 is a schematic diagram of an installation structure of an electrode plate of an electrolysis apparatus in Embodiment 15 according to a specific implementation of the present invention;
FIG. 13 is a schematic diagram of an installation structure of an electrolysis apparatus in Embodiment 16 according to a specific implementation of the present invention;
FIG. 14 is an SEM picture of a textured structure 13 on a silicon-based electrode plate in Embodiment 7 according to a specific implementation of the present invention; and
FIG. 15 is another SEM picture of a textured structure 13 on a silicon-based electrode plate in Embodiment 7 according to a specific implementation of the present invention.

### DESCRIPTION OF EMBODIMENTS

An embodiment of the present invention discloses an electrode plate of an electrolysis apparatus. A direct current power supply is connected to the electrolysis apparatus and an electrolyte is injected into the electrolysis apparatus, to convert electric energy into chemical energy. The electrode plate includes a silicon-based electrode plate made of a doped conductive silicon material. The silicon-based electrode plate is electrically connected to the direct current power supply, and a flow channel is disposed on at least one surface of the silicon-based electrode plate (the flow channel is configured to transport and distribute the electrolyte or a reaction product), so that the electrolyte is input into the electrolysis apparatus through the flow channel on the silicon-based electrode plate, to implement an electrochemical reaction and output the reaction product.

Preferably, in an implementation, resistivity of the silicon-based electrode plate is not greater than 0.1 ohm-centimeter, preferably, is 1 milliohm-centimeter to 30 milliohms-centimeter, more preferably, 1 milliohm-centimeter to 10 milliohms-centimeter, further preferably, 1 milliohm-centimeter to 5 milliohms-centimeter, and further more preferably, 1 milliohm-centimeter to 3 milliohms-centimeter. Preferably, in an implementation, the silicon-based electrode plate is made of a crystalline silicon material (including monocrystalline silicon, polycrystalline silicon, or the like in terms of a crystal type; and including N-type doped crystalline silicon or P-type doped crystalline silicon in terms of a doping type) or a noncrystalline silicon material (including metallic silicon), preferably, made of a monocrystalline silicon material. More preferably, a crystal orientation is a non-<111> crystal orientation, and may be specifically a <100> crystal orientation, a <110> crystal orientation, or another crystal orientation that has an obvious angle to a <111> crystal direction, most preferably, the <100> crystal orientation.

Preferably, in an implementation, a thick range of the silicon-based electrode plate is 0.1 millimeter to 10 millimeters, preferably, 0.2 millimeter to 5 millimeters, and more preferably, 0.5 millimeter to 2 millimeters. Preferably, in an implementation, a shape of the silicon-based electrode plate may be a square shape, a round shape, or another required shape. This is not limited in a specific implementation of the present application. A substrate of the silicon-based electrode plate used in the present application may be a silicon wafer obtained through cutting. Chemical polishing or mechanical polishing may be further performed on the silicon wafer to improve surface evenness, which is conducive to implementing a process processing effect on the silicon wafer in a subsequent step. When the present application is implemented, a thickness and a shape of the silicon-based electrode plate may be further selected according to a dynamic process development level of silicon wafer cutting processing. This is not particularly limited in a single range in the present application.

Preferably, in an implementation, the flow channel includes a channel structure including grooves and ridges distributed in an alternate manner. A width of the groove is 0.2 millimeter to 5 millimeters, preferably, 0.5 millimeter to 1 millimeter. A width of the ridge is 0.1 millimeter to 10 millimeters, preferably, 0.2 millimeter to 0.4 millimeter. A height of the ridge (equivalent to a depth of the groove) is 0.1 millimeter to 5 millimeters, more preferably, 0.1 millimeter to 2 millimeters, further preferably, 0.12 millimeter to 0.5 millimeter, and further more preferably, 0.15 millimeter to 0.5 millimeter. Preferably, in an implementation, the flow channel includes a porous or textured structure. During actual implementation, the porous or textured structure may be separately manufactured on the silicon-based electrode plate, or may be manufactured, after the channel structure is disposed on the silicon-based electrode plate, on a surface that is of the silicon-based electrode plate and on which the channel structure is located. Preferably, in an implementation, a pore diameter of the porous structure or a feature size of the textured structure is 0.1 micrometer to 1000 micrometers, preferably, 0.3 micrometer to 10 micrometers. In actual application, the electrolysis apparatus may have an electrode plate with fine flow field structure distribution and a surface appearance with a high area ratio.

Preferably, in an implementation, the channel structure is manufactured through an alkaline corrosion process or an electrochemical corrosion process. During implementation, the alkaline corrosion process may be any well-known alkaline corrosion process or any well-known electrochemical corrosion process. Further preferably, in an implementation, it is suggested to perform corrosion on the silicon-based electrode plate made of the N-type doped crystalline silicon by using a strong alkaline solution or through an electrochemical process, and it is suggested to perform corrosion on the silicon-based electrode plate made of the P-type doped crystalline silicon through an electrochemical process. Preferably, in an implementation, the strong alkaline solution may be an organic or inorganic strong alkaline aqueous solution. A mass concentration of the strong alkaline solution is recommended to be in a range of 10% to 50%, preferably, a KOH aqueous solution with a mass concentration of 25% to 35% is used. A corrosion temperature is 50°C to 120°C, preferably, a corrosion temperature of the alkaline corrosion process is 70°C to 85°C. Certainly, in another implementation, the channel structure required in this embodiment may alternatively be manufactured according to another method. Preferably, in an implementation, the porous or textured structure is manufactured according to a liquid phase method or a vapor phase method. The liquid phase method includes a process such as selective corrosion, electrochemical corrosion, or catalytic corrosion. The vapor phase method includes a process such as plasma etching. During specific implementation, any well-known silicon wafer texturing process (belonging to selective corrosion in the liquid phase method) may be used to perform surface texturing on the silicon-based electrode plate, or any well-known process (for example, vapor deposition) may be used to manufacture a porous silicon layer (that is, the porous structure). The silicon-based electrode plate has an increased area ratio after being processed through the texturing process, and an electrochemical reaction rate per unit area on a surface of the electrode plate in the electrolysis apparatus is increased, which are beneficial to performance of the electrolysis apparatus, and reduce costs of the electrolysis apparatus. After the porous silicon layer is manufactured on the silicon-based electrode plate, the porous structure in which fluid circulation can be performed is formed on a corresponding surface of the silicon-based electrode plate, which can significantly increase an area ratio of the electrode plate, is beneficial to transport and flowing efficiency of the electrolyte and the reaction product (mainly in a gas state) in the flow channel of the electrode plate, and can increase the electrochemical reaction rate per unit area in the electrolysis apparatus. In addition, the porous structure can also reduce hydrophobicity and hydrophilicity of the electrode plate, to reduce formation of large bubbles in the flow channel (if any, including exchange between the reaction raw material and the reaction product in the flow channel), and further increase the electrochemical reaction rate and improve energy conversion efficiency of the electrolysis apparatus to which the silicon-based electrode plate is applied.

Preferably, in an implementation, at least a part of the flow channel (which may be specifically at least a part of the channel structure or at least a part of the porous or textured structure) is coated with a catalyst for promoting the electrochemical reaction. The catalyst is a metal-based catalyst or non-metal-based catalyst. Preferably, in an implementation, metal-based catalysts include a precious metal-based catalyst and a non-precious metal-based catalyst. The precious metal-based catalyst is selected from, for example, any one or more of Ir, Pt, Pd, Au, or Ag. The non-precious metal-based catalyst is selected from, for example, any one or more of Fe, Co, Ni, or Al. The non-metal-based catalyst is, for example, a carbon material or a carbon composite material. It is verified experimentally in the present application that, in alkaline electrolysis apparatus application, the silicon-based electrode plate matches a precious metal catalyst, for example, Ir alloy and Al alloy, and matches a non-precious metal material nickel-based catalyst (that is, a catalyst containing nickel Ni, including a nickel catalyst or a nickel alloy catalyst). The nickel catalyst may be specifically pure electroplated nickel, and the nickel alloy catalyst may be a high-activity nickel alloy catalyst, for example, Raney nickel, activated nickel sulfide, Ni-Mo alloy, or activated NiAl. During actual implementation, a proper catalyst is selected according to specific costs and/or performance requirements. This is not uniquely limited in this embodiment. It is verified experimentally that, when a catalyst layer is disposed on the electrode plate provided in this embodiment of the present application, a diffusion layer may no longer be disposed for a membrane or a proton exchange membrane in specific application, to further save structure costs.

When the present application is implemented, the catalyst may be coated according to any well-known method. This is not particularly limited in the present application. For example, the catalyst is coated through spraying, printing, electroplating, or PVD. Specifically, it is suggested to preferably directly coat the catalyst on the channel structure through electroplating or PVD or in another integrated deposition coating manner. It is suggested to preferably coat the catalyst on the porous structure in a physical coating manner such as spraying or printing.

Preferably, in an implementation, an area ratio range of the flow channel is 1.2 to 5, more preferably, 1.7 to 2. In actual application, an overpotential of the electrochemical reaction in the electrolysis apparatus can be significantly reduced, and a reaction rate per unit area can be increased. It should be particularly noted that, after the catalyst is coated on the flow channel in this embodiment, activity of the catalyst can be further increased to further reduce the overpotential of the electrochemical reaction, and increase the reaction rate per unit area in the electrolysis apparatus.

It should be noted that, in the present application, different bipolar plates, terminal anode plates, or terminal cathode plates may be separately manufactured according to the electrode plate solution provided in the foregoing implementation in combination with a specific requirement of the electrolysis apparatus. This is not uniquely limited in this embodiment.

Preferably, this embodiment provides an electrolysis apparatus. A direct current power supply is connected to the electrolysis apparatus and an electrolyte is injected into the electrolysis apparatus, to convert electric energy into chemical energy. An electrode plate of the electrolysis apparatus is the electrode plate described above.

Preferably, in an implementation, the electrolyte is pure water, an alkaline aqueous solution, or an acidic aqueous solution. Water is electrolyzed to produce hydrogen and oxygen through an electrochemical reaction. Certainly, a proper electrolyte may alternatively be selected according to an actual requirement to prepare a required reaction product.

Preferably, in an implementation, the electrolysis apparatus includes an anode terminal plate connected to a positive terminal of the direct current power supply, a cathode terminal plate connected to a negative terminal of the direct current power supply, a terminal anode plate electrically connected to the anode terminal plate, and a terminal cathode plate electrically connected to the cathode terminal plate. A membrane, a proton exchange membrane, or one or more electrolysis units connected in series and/or parallel are disposed between the terminal anode plate and the terminal cathode plate. The electrolysis unit includes a bipolar plate and membranes or proton exchange membranes located on two sides of the bipolar plate.

It should be further noted that, in the present application, the electrode plate structure provided in this embodiment may be further applied to various types of electrolysis apparatuses according to an actual requirement, including but not limited to: an alkaline electrolysis apparatus (also referred to as an alkaline electrolysis bath), a PEM (abbreviation of English "Proton Exchange Membrane") electrolysis apparatus (also referred to as a PEM electrolysis bath). Certainly, the electrode plate structure may be further applied to another type of electrolysis apparatus with a similar requirement. These are routine application choices that can be made by a person skilled in the art within the scope of the present application. Details are not described in the embodiments of the present application again.

To describe technical solutions in the embodiments of the present invention or in the conventional technology more clearly, the following briefly describes the accompanying drawings needed for describing the embodiments or the conventional technology. Clearly, the accompanying drawings in the following description merely show some embodiments of the present invention, and a person of ordinary skill in the art can still derive other drawings from these accompanying drawings without creative efforts.

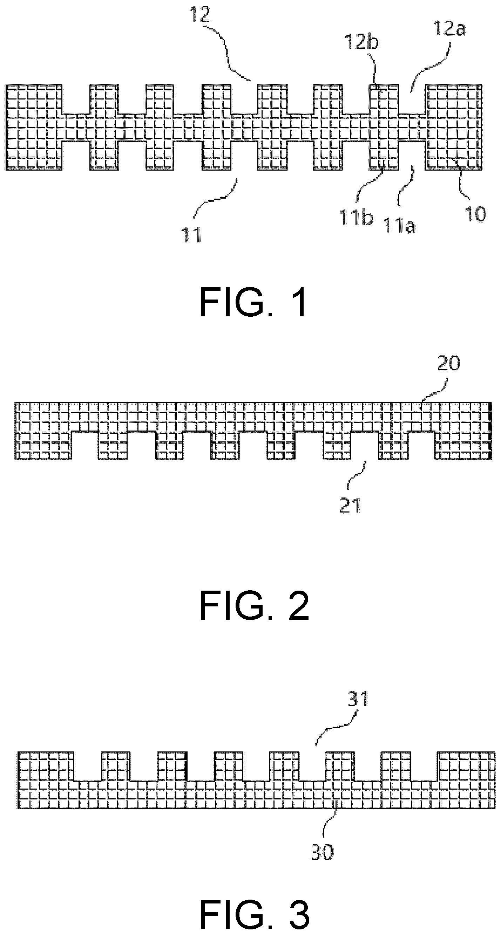

**Embodiment 1:** Refer to FIG. 1. An electrode plate of a water electrolysis apparatus. The electrode plate serves as a bipolar plate, and includes a silicon-based electrode plate 10 made of a doped conductive silicon material.

An electrolyte connection port, an anode product outlet, and a cathode product outlet are separately disposed on the silicon-based electrode plate 10.

An anode flow channel 11 connected to the anode product outlet is disposed on a lower surface of the silicon-based electrode plate 10, and a cathode flow channel 12 connected to the cathode product outlet is disposed on an upper surface of the silicon-based electrode plate 10.

The electrolyte connection port is connected to the anode flow channel 11. In another implementation, as a suboptimal embodiment, the electrolyte connection port may be connected to the cathode flow channel 12 or may be connected to both of the anode flow channel 11 and the cathode flow channel 12.

In this embodiment, during actual manufacturing, a silicon wafer that has a thickness of 1.5 millimeters and a round shape and is made of N-type doped monocrystalline silicon (with a <100> crystal orientation) is specifically used as a substrate of the silicon-based electrode plate 10, where resistivity is 2.5 milliohms-centimeter.

Selective corrosion is performed on two surfaces of the silicon wafer by using a KOH aqueous solution with a mass concentration of 30% to obtain a silicon-based electrode plate whose upper and lower surfaces each have a channel structure. The channel structure located on the upper surface of the silicon-based electrode plate 10 serves as the cathode flow channel 12, and the channel structure located on the lower surface of the silicon-based electrode plate 10 serves as the anode flow channel 11.

During specific implementation, a size of the channel structure of the cathode flow channel 12 may be set the same as or different from a size of the channel structure of the anode flow channel 11. In addition, the channel structure in a same electrode flow channel (for example, the anode flow channel 11 or the cathode flow channel 12) may alternatively be disposed as an alternate arrangement of thick and thin channel units, to obtain more excellent fluid transfer efficiency, thereby improving efficiency of an electrochemical reaction, and reducing power consumption for driving flow of a reactant and a product in the electrolysis apparatus.

In an implementation, a width of a groove 11a of the channel structure as the anode flow channel 11 is 0.8 millimeter, a depth of the groove is 0.2 millimeter, and a width of a ridge 11b is 0.4 mm. A shape of the channel structure as the cathode flow channel 12 is the same as that of the channel structure as the anode flow channel 11, but a width of a groove 12a of the channel structure as the cathode flow channel 12 is 0.8 millimeter, a depth is 0.15 millimeter, and a width of a ridge 12b is 0.4 mm. The electrolyte connection port, the anode product outlet, and the cathode product outlet are separately manufactured on the silicon wafer through a laser process or another process. The two steps may be separately performed in an arbitrary sequence based on an actual requirement.

It should be noted that, to implement a connection effect between each of the electrolyte connection port, the anode product outlet, and the cathode product outlet and a corresponding flow channel, a person skilled in the art may aware that a flow guide structure needs to be manufactured at a proper location in a peripheral region of the silicon wafer, so that the electrolyte, an anode product, and a cathode product are separately imported into and exported from the electrolysis apparatus through a flow field of the electrode plate. Specifically, preferably, the flow guide structure may be manufacture together with the channel structure. Details are not specifically described in this embodiment.

In this embodiment, a single silicon wafer is used as the substrate of the silicon-based electrode plate 10. When the silicon-based electrode plate 10 is applied to a PEM water electrolysis apparatus, there is no need to coat any membrane on the silicon-based electrode plate. After electrolysis hydrogen production is performed for a long time, electrical, mechanical, and chemical performance of the electrode plate remains unchanged. In this embodiment, a cooling effect is directly implemented by using the electrolyte connected to the anode flow channel. Therefore, it is suggested to set a flow rate of the electrolyte to be large, which requires a large electrolyte driving power.

**Embodiment 2:** Refer to FIG. 2. An electrode plate of an electrolysis apparatus is provided. The electrode plate serves as a terminal anode plate. The terminal anode plate includes a silicon-based electrode plate 20 made of a doped conductive silicon material.

An electrolyte connection port and an anode product outlet are disposed on the silicon-based electrode plate 20.

An anode flow channel 21 connected to the anode product outlet is disposed on a lower surface of the silicon-based electrode plate 20.

The electrolyte connection port is connected to the anode flow channel 21.

Remaining implementations of Embodiment 2 are the same as those of Embodiment 1.

**Embodiment 3:** Refer to FIG. 3. An electrode plate of an electrolysis apparatus is provided. Preferably, the electrode plate serves as a terminal cathode plate. The terminal cathode plate includes a silicon-based electrode plate 30 made of a doped conductive silicon material.

An electrolyte connection port and a cathode product outlet are disposed on the silicon-based electrode plate 30.

A cathode flow channel 31 connected to the cathode product outlet is disposed on an upper surface of the silicon-based electrode plate 30.

Remaining implementations of Embodiment 3 are the same as those of Embodiment 1.

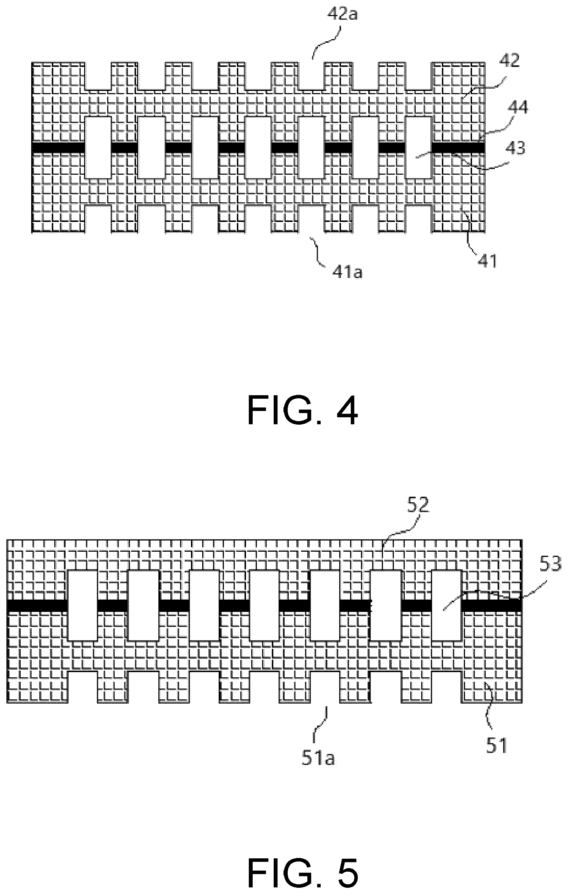

**Embodiment 4:** Refer to FIG. 4. An electrode plate of an electrolysis apparatus is provided. The electrode plate serves as a bipolar plate. The bipolar plate includes a first silicon-based electrode plate 41 and a second silicon-based electrode plate 42 that are stacked together.

An electrolyte connection port, an anode product outlet, a cathode product outlet, and a coolant connection port are disposed on each of the silicon-based electrode plates 41 and 42.

An anode flow channel 41a connected to the anode product outlet is disposed on an outer surface of the first silicon-based electrode plate 41, and a cathode flow channel 42a connected to the cathode product outlet is disposed on the second silicon-based electrode plate 42.

The electrolyte connection port is connected to the anode flow channel 41a.

In addition, a coolant flow channel 43 connected to the coolant connection port is formed between the first silicon-based electrode plate 41 and the second silicon-based electrode plate 42.

Remaining implementations of Embodiment 4 are the same as those of Embodiment 1. It should be particularly noted that the coolant connection port can also be manufactured through a laser process or another process. To implement a connection effect between the coolant connection port and the corresponding coolant flow channel 43, a person skilled in the art may aware that a flow guide structure needs to be manufactured at a proper location in a peripheral region of the silicon wafer. In this embodiment, the first silicon-based electrode plate 41 and the second silicon-based electrode plate 42 may be directly fixedly stacked together by using a sealing material (for example, a sealant layer 44 is used in this embodiment). In another implementation, a metal material may alternatively be used for high-temperature sintering to implement a fixed stacked effect.

The coolant flow channel 43 (a coolant may be water, and certainly, may alternatively be another proper coolant) is disposed on the bipolar plate provided in this embodiment. Heat produced during the electrochemical reaction is taken away through the coolant flow channel 43. A quantity of flow of an electrolyte only needs to meet a requirement of the electrochemical reaction. Therefore, a flow rate of the electrolyte may be set to a low level, to further save energy consumed in transporting the electrolyte.

**Embodiment 5:** Refer to FIG. 5. An electrode plate of an electrolysis apparatus is provided. The electrode plate serves as a terminal anode plate. The terminal anode plate includes a first silicon-based electrode plate 51 and a second silicon-based electrode plate 52 that are stacked together.

An electrolyte connection port, an anode product outlet, and a coolant connection port are disposed on each of the silicon-based electrode plates 51 and 52.

An anode flow channel 51a connected to the anode product outlet is disposed on an outer surface of the first silicon-based electrode plate 51.

The electrolyte connection port is connected to the anode flow channel 51a.

In addition, a coolant flow channel 53 connected to the coolant connection port is formed between the first silicon-based electrode plate 51 and the second silicon-based electrode plate 52.

Remaining implementations of Embodiment 5 are the same as those of Embodiment 4.

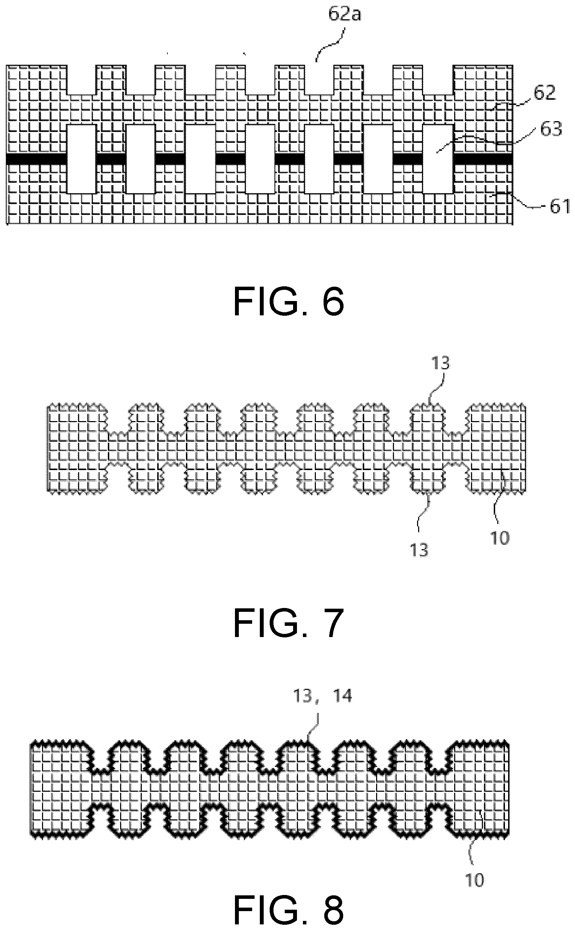

**Embodiment 6:** Refer to FIG. 6. An electrode plate of an electrolysis apparatus is provided. The electrode plate serves as a terminal cathode plate. The terminal cathode plate includes a first silicon-based electrode plate 61 and a second silicon-based electrode plate 62 that are stacked together.

An electrolyte connection port, a cathode product outlet, and a coolant connection port are disposed on each of the silicon-based electrode plates 61 and 62.

A cathode flow channel 62a connected to the cathode product outlet is disposed on an outer surface of the second silicon-based electrode plate 62.

In addition, a coolant flow channel 63 connected to the coolant connection port is formed between the first silicon-based electrode plate 61 and the second silicon-based electrode plate 62.

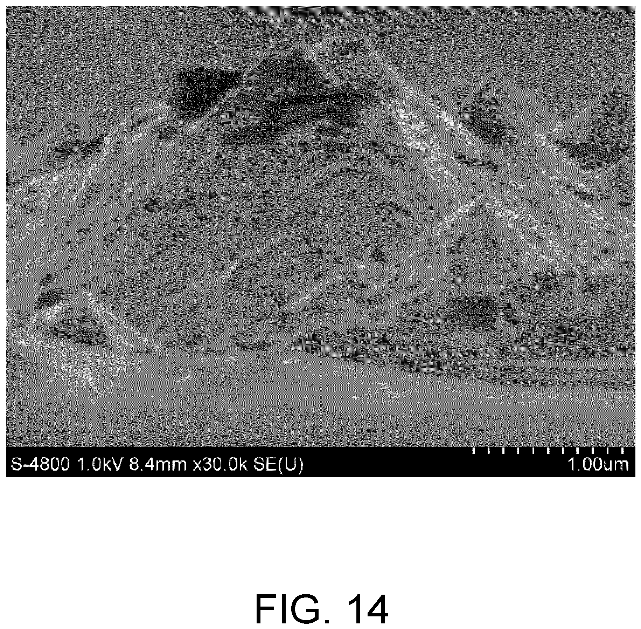

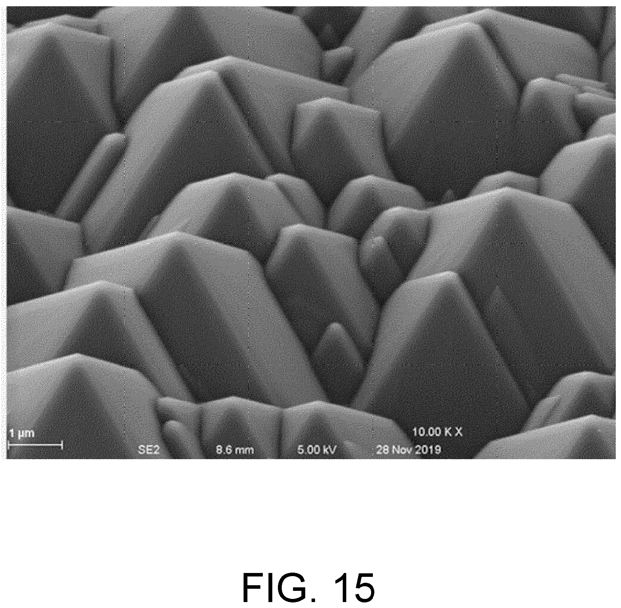

**Embodiment 7:** Refer to FIG. 7. Remaining technical solutions of Embodiment 7 are the same as those of Embodiment 1. A difference lies in that a texturing process is performed on the upper and lower surfaces that are of the silicon-based electrode plate 10 and on which the channel structure is disposed. A textured structure 13 (further refer to FIG. 14 and FIG. 15) is further manufactured based on the channel structure.

**Embodiment 8:** Remaining technical solutions of Embodiment 8 are the same as those of Embodiment 7. A difference lies in that a porous silicon layer is further manufactured on the textured structure 13 according to a vapor phase method.

**Embodiment 9:** Remaining technical solutions of Embodiment 9 are the same as those of Embodiment 7. Refer to FIG. 8. A difference lies in that a catalyst layer 14, specifically, an activated nickel sulfide layer, is further coated on a porous structure 13.

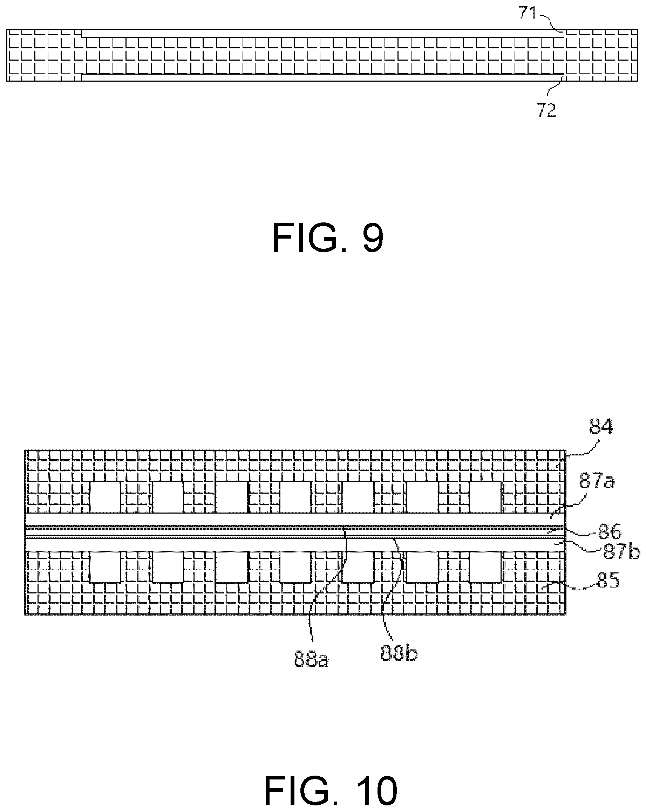

**Embodiment 10:** Remaining technical solutions of Embodiment 10 are the same as those of Embodiment 1. Refer to FIG. 9. A difference lies in that a porous silicon layer as a porous structure is manufactured on the two surfaces of the silicon wafer through deposition. Preferably, to facilitate a flow field effect of the porous structure and mechanical structure stability of the electrode plate, in this embodiment, grooves 71 and 72 are respectively manufactured in middle regions of the upper and lower surfaces of the silicon wafer in advance (specifically, any well-known processing process may be used), and the porous silicon layer is manufactured in the grooves 71 and 72 according to a liquid phase method or a vapor phase method (not shown in the figure).

**Embodiment 11:** Remaining technical solutions of Embodiment 11 are the same as those of Embodiment 1. A difference lies in that a catalyst layer, specifically, an activated nickel sulfide layer, is further coated on the channel structure.

**Embodiment 12:** An electrode plate of an electrolysis apparatus is provided. The electrode plate is the terminal anode plate provided in Embodiment 2. A texturing process is performed on the lower surface that is of the silicon-based electrode plate and on which the channel structure is disposed, to further manufacture a textured structure based on the channel structure. Then, a catalyst layer, specifically, an activated nickel sulfide layer, is further coated on the textured structure.

**Embodiment 13:** An electrode plate of an electrolysis apparatus is provided. The electrode plate is the terminal cathode plate provided in Embodiment 3. A texturing process is performed on the upper surface that is of the silicon-based electrode plate and on which the channel structure is disposed, to further manufacture a textured structure based on the channel structure. Then, a catalyst layer, specifically, an activated nickel sulfide layer, is further coated on the textured structure.

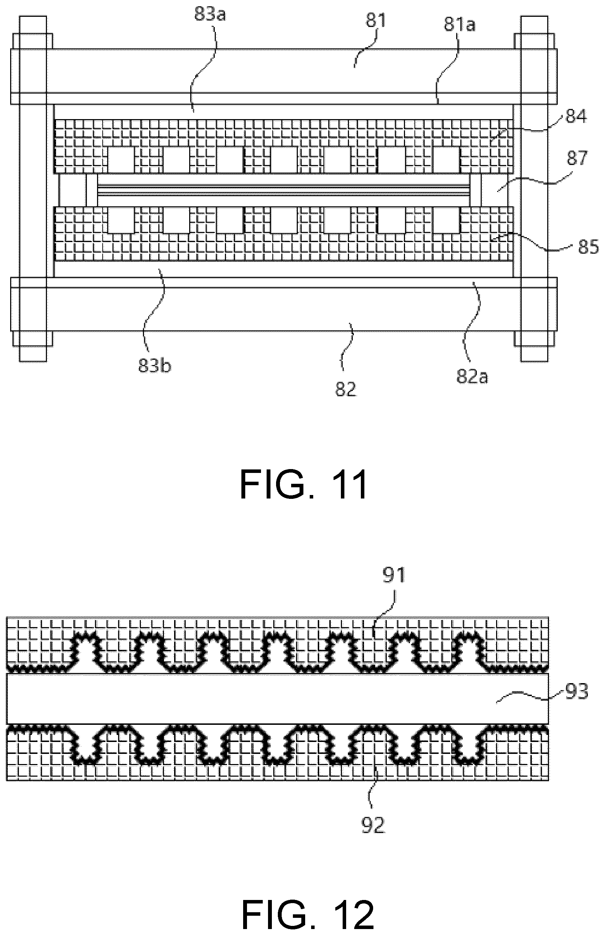

**Embodiment 14:** An electrolysis apparatus is provided. A direct current power supply is connected to the electrolysis apparatus and an electrolyte is injected into the electrolysis apparatus, to convert electric energy into chemical energy. Refer to FIG. 10 and FIG. 11. The electrolysis apparatus includes an anode collector plate 83a connected to a positive terminal of the direct current power supply, a cathode collector plate 83b connected to a negative terminal of the direct current power supply, a terminal anode plate 84 electrically connected to the anode collector plate 83a, and a terminal cathode plate 85 electrically connected to the cathode collector plate 83b. To implement a safe and reliable installation connection effect, an anode terminal plate 81 and a cathode terminal plate 82 are respectively disposed at upper and lower terminals of the electrolysis apparatus. An anode insulator 81a is disposed between the anode terminal plate 81 and the anode collector plate 83a, and a cathode insulator 82a is disposed between the cathode terminal plate 82 and the cathode collector plate 83b, to ensure electric insulation between the anode collector plate 83a and the cathode collector plate 83b.

The terminal anode plate 84 in this embodiment is the terminal anode plate provided in Embodiment 2. The terminal cathode plate 85 in this embodiment is the terminal cathode plate provided in Embodiment 3. A proton exchange membrane 86 is disposed between the terminal anode plate 84 and the terminal cathode plate 85, and peripheries of the terminal anode plate 84 and the terminal cathode plate 85 are hermetically stacked by using a sealing element 87. To further improve operating efficiency, an anode diffusion layer 87a and a cathode diffusion layer 87b are further respectively disposed on two sides of the proton exchange membrane 86, an anode catalyst 88a is disposed between the anode diffusion layer 87a and the proton exchange membrane 86, and a cathode catalyst 88b is disposed between the cathode diffusion layer 87b and the proton exchange membrane 86. A person skilled in the art may perform combined application according to an actual requirement.

Preferably, in Embodiment 14, an electrolyte is pure water. Water is electrolyzed through an electrochemical reaction in the electrolysis apparatus to produce hydrogen and oxygen. Hydrogen is a cathode product, and oxygen is an anode product.

**Embodiment 15:** Refer to FIG. 12. An electrolysis apparatus is provided. The terminal anode plate provided in Embodiment 12 is used as a terminal anode plate 91, and the terminal cathode plate provided in Embodiment 13 is used as a terminal cathode plate 92. A membrane 93 (any well-known membrane structure may be used) is disposed between the terminal anode plate 91 and the terminal cathode plate 92. An electrolyte is an NaOH aqueous solution. An alkaline electrolysis apparatus is assembled according to a well-known installation method.

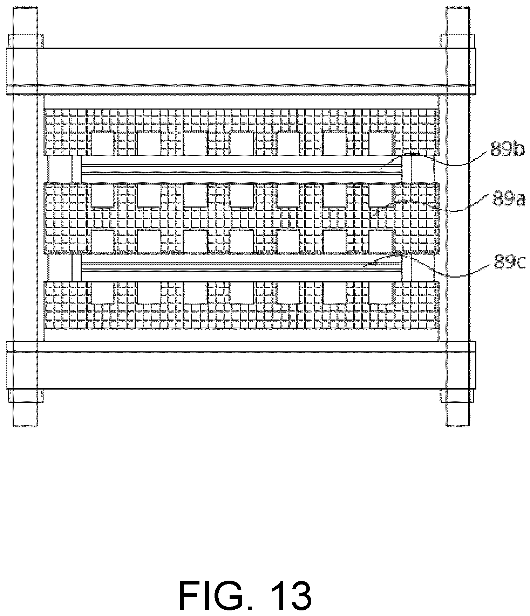

**Embodiment 16:** Remaining technical solutions of Embodiment 16 are the same as those of Embodiment 14. Refer to FIG. 13. In the electrolysis apparatus provided in Embodiment 16, one electrolysis unit is disposed between the terminal anode plate 84 and the terminal cathode plate 85. The electrolysis unit includes a bipolar plate 89a (which is specifically the bipolar plate provided in Embodiment 1, and may alternatively be the bipolar plate provided in Embodiment 4 in another implementation) and proton exchange membranes 89b and 89c located on two sides of the bipolar plate (similarly, a diffusion layer and a catalyst may be further disposed on two sides of the proton exchange membrane with reference to Embodiment 14). Then, a PEM electrolysis apparatus is assembled. In another implementation, membranes may alternatively be disposed on the two sides of the bipolar plate according to an actual requirement, and two or more electrolysis units connected in series and/or parallel may be disposed between the terminal anode plate and the terminal cathode plate, where the membrane or the proton exchange membrane may be shared when adjacent electrolysis units are connected in series and/or parallel.

It should be further noted that, in subsequent application, the electrolysis apparatus provided in Embodiment 16 may be manufactured into a standard product, and the standard product is assembled into various specifications of electrolysis apparatus modules after being connected to the direct current power supply in series and/or parallel to produce gas at a cathode and produce gas at an anode by introducing the electrolyte, and different electrolysis apparatus systems may be flexibly assembled based on a size of the connected direct current power supply. Further preferably, when electricity supply is not enough for all electrolysis apparatuses to operate, some electrolysis apparatuses may selectively stop operating, to enable the remaining electrolysis apparatuses to perform electrolysis normally. It should be particularly noted that "perform electrolysis normally" herein means that the remaining electrolysis apparatuses perform electrolysis in an optimal operating point state, where the optimal operating point state means that the electrolysis apparatuses operate under conditions of optimal operating current density and an optimal operating voltage in order to achieve highest energy conversion efficiency. Therefore, it is ensured that an entire electrolysis apparatus module system produces hydrogen at a highest rate. When intermittent photovoltaic and wind power systems are used as power supplies, the electrolysis apparatus system can perform electrolysis with maximum efficiency.

To verify the technical effects obtained by the present application, the applicants detect Embodiment 15 and Embodiment 16 as follows:

A voltage of the connected direct current power supply is 1.75 V per electrolysis unit; an operating temperature range of the electrolysis apparatus is 60°C to 80°C; and an operating voltage range of the electrolysis apparatus is 1.5 V to 2.4 V per electrolysis unit.

A quantity of flow of produced hydrogen is detected according to a detection standard GB/T 19774-2005, and detection results are as follows:

A quantity of flow of hydrogen output in Embodiment 15 is 0.09 Nm³/h, and corresponding energy conversion efficiency is 84.6%.

A quantity of flow of hydrogen output in Embodiment 16 is 0.2 Nm³/h, and corresponding energy conversion efficiency is 84.6%.

It should be particularly noted that energy conversion efficiency of the electrolysis apparatus provided in the embodiments of the present application is 84.6% when a voltage condition of the direct current power supply is 1.75 V per electrolysis unit in the present application. This is amazing enough for the field of electrolysis, and shows an outstanding progress.

It will be clear to a person skilled in the art that the present invention is not limited to the details of the foregoing example embodiments, and the present invention can be implemented in other specific forms without departing from the spirit or essential features of the present invention. Therefore, the embodiments should be regarded in all respects as examples rather than as restrictive, and the scope of the present invention is defined by the appended claims rather than the foregoing descriptions. Therefore, all changes falling within the meanings and scope of equivalent elements of the claims are included in the present invention. Any reference numeral in the claims shall not be construed as limiting the claims.

In addition, it should be understood that, although this specification has been described with reference to implementations, not every implementation includes only one independent technical solution, and such description of this specification is by way of clarity only. A person skilled in the art should take this specification as a whole, and the technical solutions of the embodiments may be combined as appropriate to obtain other implementations that can be understood by a person skilled in the art.

## Claims

1. An electrode plate of an electrolysis apparatus, wherein a direct current power supply is connected to the electrolysis apparatus and an electrolyte is injected into the electrolysis apparatus, to convert electric energy into chemical energy, **characterized in that**, the electrode plate comprises a silicon-based electrode plate made of a doped conductive silicon material; and the silicon-based electrode plate is electrically connected to the direct current power supply, and a flow channel is disposed on at least one surface of the silicon-based electrode plate, so that the electrolyte is input into the electrolysis apparatus through the silicon-based electrode plate, to implement an electrochemical reaction and output a reaction product.

2. The electrode plate of an electrolysis apparatus according to claim 1, **characterized in that**, resistivity of the silicon-based electrode plate is not greater than 0.1 ohm-centimeter, preferably, is 1 milliohm-centimeter to 30 milliohms-centimeter; the silicon-based electrode plate is made of a monocrystalline silicon or polycrystalline silicon material, preferably, made of a monocrystalline silicon material; and/or a thickness range of the silicon-based electrode plate is 0.1 millimeter to 10 millimeters, preferably, is 0.2 millimeter to 5 millimeters.

3. The electrode plate of an electrolysis apparatus according to claim 1, **characterized in that**, the flow channel comprises a channel structure comprising grooves and ridges distributed in an alternate manner; a width of the groove is 0.2 millimeter to 5 millimeters, preferably, 0.5 millimeter to 1 millimeter; a width of the ridge is 0.1 millimeter to 10 millimeters, preferably, 0.2 millimeter to 0.4 millimeter; a height of the ridge is 0.1 millimeter to 5 millimeters, preferably, 0.12 millimeter to 0.5 millimeter; and/or the flow channel comprises a porous or textured structure, a pore diameter of the porous structure or a feature size of the textured structure is 0.1 micrometer to 1000 micrometers, preferably, 0.3 micrometer to 10 micrometers.

4. The electrode plate of an electrolysis apparatus according to claim 3, **characterized in that**, the channel structure is manufactured through an alkaline corrosion process or an electrochemical corrosion process; and the porous structure or the textured structure is manufactured according to a liquid phase method or a vapor phase method.

5. The electrode plate of an electrolysis apparatus according to claim 1, **characterized in that**, at least a part of the flow channel is coated with a catalyst for promoting the electrochemical reaction; and the catalyst is a metal-based catalyst or a non-metal-based catalyst, preferably, an iridium-based catalyst, a platinum-based catalyst, a nickel catalyst, or a nickel alloy catalyst.

6. The electrode plate of an electrolysis apparatus according to claim 1 or 5, **characterized in that**, an area ratio range of the flow channel is 1.2 to 5, preferably, 1.5 to 3, and more preferably, 1.7 to 2.

7. The electrode plate according to any one of claims 1 to 6, **characterized in that**, the electrode plate serves as a bipolar plate;
at least an electrolyte connection port, an anode product outlet, and a cathode product outlet are separately disposed on the silicon-based electrode plate;
an anode flow channel connected to the anode product outlet is disposed on one surface of the silicon-based electrode plate, and a cathode flow channel connected to the cathode product outlet is disposed on the other surface; and
the electrolyte connection port is connected to the anode flow channel and/or the cathode flow channel.

8. The electrode plate according to any one of claims 1 to 6, **characterized in that**, the electrode plate serves as a bipolar plate, and the bipolar plate comprises at least a first silicon-based electrode plate and a second silicon-based electrode plate that are stacked together;
at least an electrolyte connection port, an anode product outlet, a cathode product outlet, and a coolant connection port are disposed on each of the silicon-based electrode plates;
an anode flow channel connected to the anode product outlet is disposed on an outer surface of the first silicon-based electrode plate, and a cathode flow channel connected to the cathode product outlet is disposed on the second silicon-based electrode plate;
the electrolyte connection port is connected to the anode flow channel and/or the cathode flow channel; and
a coolant flow channel connected to the coolant connection port is formed between the first silicon-based electrode plate and the second silicon-based electrode plate.

9. The electrode plate according to any one of claims 1 to 6, **characterized in that**, the electrode plate serves as a terminal anode plate or a terminal cathode plate, and the terminal anode plate or the terminal cathode plate comprises the silicon-based electrode plate made of the doped conductive silicon material;
an electrolyte connection port and an anode product outlet or a cathode product outlet are disposed on the silicon-based electrode plate;
an anode flow channel connected to the anode product outlet or a cathode flow channel connected to the cathode product outlet is disposed on one surface of the silicon-based electrode plate; and
the electrolyte connection port is connected to the anode flow channel or the cathode flow channel.

10. The electrode plate according to any one of claims 1 to 6, **characterized in that**, the electrode plate serves as a terminal anode plate or a terminal cathode plate, the terminal anode plate or the terminal cathode plate comprises at least a first silicon-based electrode plate and a second silicon-based electrode plate that are stacked together, and each of the silicon-based electrode plates is made of the doped conductive silicon material;
at least an electrolyte connection port, an anode product outlet or a cathode product outlet, and a coolant connection port are disposed on each of the silicon-based electrode plates;
an anode flow channel connected to the anode product outlet or a cathode flow channel connected to the cathode product outlet is disposed on an outer surface of the first silicon-based electrode plate or the second silicon-based electrode plate;
the electrolyte connection port is connected to the anode flow channel or the cathode flow channel; and
a coolant flow channel connected to the coolant connection port is formed between the first silicon-based electrode plate and the second silicon-based electrode plate.

11. An electrolysis apparatus, wherein a direct current power supply is connected to the electrolysis apparatus and an electrolyte is injected into the electrolysis apparatus, to convert electric energy into chemical energy, **characterized in that**, an electrode plate of the electrolysis apparatus is the electrode plate according to any one of claims 1 to 10.

12. The electrolysis apparatus according to claim 11, **characterized in that**, the electrolyte is pure water, an alkaline aqueous solution, or an acidic aqueous solution, and water is electrolyzed to produce hydrogen and oxygen through an electrochemical reaction.

13. The electrolysis apparatus according to claim 11, **characterized by** comprising an anode collector plate connected to a positive terminal of the direct current power supply, a cathode collector plate connected to a negative terminal of the direct current power supply, a terminal anode plate electrically connected to the anode collector plate, and a terminal cathode plate electrically connected to the cathode collector plate, wherein a membrane, a proton exchange membrane, or one or more electrolysis units connected in series and/or parallel are disposed between the terminal anode plate and the terminal cathode plate, and the electrolysis unit comprises a bipolar plate and membranes or proton exchange membranes located on two sides of the bipolar plate.

14. The electrolysis apparatus according to claim 11, **characterized in that**, the electrolysis apparatus is manufactured into a standard product, and the standard product is assembled into a required electrolysis apparatus module after being connected to the direct current power supply in series and/or parallel, and when electricity supply of the direct current power supply is not enough for all electrolysis apparatuses to operate, some electrolysis apparatuses selectively stop operating, to enable the remaining electrolysis apparatuses to perform electrolysis normally.
